# EUROPÄISCHE PATENTSCHRIFT

(11) **EP 1 896 159 B1**
(45) Veröffentlichungstag und Bekanntmachung des Hinweises auf die Patenterteilung: **11.08.2010**
(21) Anmeldenummer: 06777370.5
(22) Anmeldetag: 20.06.2006
(51) Int. Cl.: B01D 46/24

(54) **FILTER MIT EINEM FILTERGEHÄUSE**
FILTER WITH A FILTER HOUSING
FILTRE DOTE D'UN BOITIER

(30) Priorität: 25.06.2005 DE 202005009989 U
(43) Veröffentlichungstag der Anmeldung: 12.03.2008
(73) Patentinhaber: MANN + HUMMEL GMBH, 71638 Ludwigsburg (DE)
(72) Erfinder: KOPEC, Edvard, 94036 Passau (DE); RUHLAND, Klaus-Dieter, 67149 Meckenheim (DE)
(86) Internationale Anmeldenummer: PCT/EP2006/063331
(87) Internationale Veröffentlichungsnummer: WO 2007/000397

(56) Entgegenhaltungen:
- EP-A- 1 364 695
- US-A- 4 775 469
- US-A- 5 030 264

## Beschreibung

Die Erfindung bezieht sich auf einen Filter in einem Filtergehäuse nach dem Oberbegriff des Anspruches 1.

In der Druckschrift EP 1 364 695 A1 wird ein Luftfilter beschrieben, der zur Reinigung von Verbrennungsluft im Ansaugtrakt einer Brennkraftmaschine angeordnet ist. Der Luftfilter umfasst eine Filterpatrone, welche radial in ein Filtergehäuse eingesetzt wird, das axial von der zu reinigenden Verbrennungsluft durchströmt wird. Die Filterpatrone umfasst ein Trägergehäuse, in welchem das Filterelement aufgenommen ist. Zum Einsetzen und Herausnehmen der Filterpatrone ist am Trägergehäuse ein verschwenkbarer Bügel angeordnet, der die Handhabung bei der Montage und dem Wechsel der Filterpatrone erleichtern soll.

Beim Einsetzen der Filterpatrone ist auf einen sicheren Sitz im Filtergehäuse zu achten. Hierfür sind üblicherweise Arretierungsmaßnahmen vorgesehen, über die die eingesetzte Filterpatrone unverrückbar am Filtergehäuse befestigt wird. Beispielsweise erfolgt die Arretierung der Filterpatrone über einen Gehäusedeckel, welcher nach dem Einsetzen der Filterpatrone auf das Filtergehäuse gesetzt wird. In anderen Ausführungen können Klemmeinrichtungen am Filtergehäuse vorgesehen sein, über die die Filterpatrone nach dem Einsetzen festgeklemmt wird.

Der Erfindung liegt das Problem zugrunde, einen konstruktiv einfach aufgebauten Filter zu schaffen, dessen Filterelement mit geringem Aufwand im Filtergehäuse arretiert werden kann.

Dieses Problem wird erfingdungsgemäß mit den Merkmalen des Anspruches 1 gelöst. Die Unteransprüche geben zweckmäßige Weiterbildungen an.

Der Bügel ist über ein Drehgelenk schwenkbar am Trägergehäuse gehalten und kann zwischen einer Arretierposition und einer Löseposition verstellt werden. In der Arretierstellung ist ein Klemmabschnitt am Bügel zwischen einem Absatz am Filtergehäuse und einem Absatz am Trägergehäuse eingeklemmt, wodurch zum einen der Bügel in Arretierstellung in einer selbsthemmenden Position steht und zum anderen das Trägergehäuse im Filtergehäuse festgeklemmt ist. In dem Trägergehäuse ist das Filterelement aufgenommen, das Trägergehäuse und das Filterelement bilden gemeinsam eine Filterpatrone. Über die Arretierung des Trägergehäuses am Filtergehäuse wird automatisch auch eine Arretierung des Filterelementes erreicht.

Zum Lösen der Filterpatrone muss lediglich der Bügel wieder in seine Löseposition verschwenkt werden, wodurch der Klemmabschnitt am Bügel seine selbsthemmende Position verlässt und insgesamt die Arretierposition aufgehoben wird. Nach dem Erreichen der Löseposition kann die Filterpatrone am Bügel aus dem Aufnahmeraum im Filtergehäuse entnommen werden.

Diese Ausführung weist verschiedene Vorteile auf. Zum einen wird kein zusätzliches Bauteil für das Festklemmen der Filterpatrone im Filtergehäuse benötigt; vielmehr kann der am Trägergehäuse schwenkbar angeordnete Bügel in einer Doppelfunktion genutzt werden, gemäß der dem Bügel einerseits eine Tragfunktion zum Einsetzen und Herausnehmen in das bzw. aus dem Filtergehäuse und andererseits eine Klemmfunktion in Arretierstellung zukommt. Die Überführung zwischen Arretierstellung und Lösestellung wird durch eine einfache Schwenkbewegung des Bügels durchgerührt.

Ein weiterer Vorteil ist darin zu sehen, dass der Bügel in der Arretierposition eine selbsthemmende Stellung einnimmt, welche durch das Einklemmen zwischen dem Absatz am Trägergehäuse und dem Absatz am Filtergehäuse erreicht wird. Diese Selbsthemmung des Bügels stellt eine zusätzliche Sicherungsmaßnahme gegen ein versehentliches, unbeabsichtigtes Lösen aus der Arretierstellung dar.

Die Schwenkbewegung wird über eine Bügelbetätigung ausgeführt, wobei diese Bewegung aufgrund des Abstandes zwischen der Bügeloberseite und der Drehachse des Drehgelenks am Bügel mit einem verhältnismäßig großen Drehmoment durchgeführt wird, welches das Erreichen der Klemm- bzw. Arretierposition und auch das Lösen aus der Arretierposition erleichtert.

In einer zweckmäßigen Ausführung ist der Klemmabschnitt am Bügel in Form eines Bügelschuhs ausgebildet, der Bestandteil des Drehgelenks ist, über das der Bügel schwenkbar am Trägergehäuse gehalten ist. Dieser Bügelschuh ist in einer vorteilhaften Ausführung näherungsweise rechteckförmig ausgebildet, wobei die Schmalseiten des Rechtecks in Arretierstellung an den Absätzen am Filtergehäuse bzw. am Trägergehäuse abgestützt werden. In der Lösestellung liegen dagegen die Schmalseiten in Außereingriff mit den Absätzen, sodass der Bügel frei oder zumindest mit lediglich geringem Kraftaufwand verschwenkt werden kann. Die Schmalseiten stellen zugleich eine ebene Abstützfläche am Bügelschuh dar, über die eine flächenmäßige Abstützung an den Absätzen am Trägergehäuse bzw. am Filtergehäuse realisierbar ist.

Die von Schmalseite zu Schmalseite verlaufende Längsachse des rechteckförmigen Bügelschuhs schließt mit der Achse des Bügels zweckmäßig einen Winkel ein, der kleiner als 90° ist, insbesondere etwa 70° beträgt. Aufgrund dieser Winkelanordnung zwischen Bügelschuh und Bügel liegt der Bügel in der Arretierposition schräg auf dem Außenmantel des Trägergehäuses auf, wodurch ein Überstehen des oberen Abschnittes des Bügels über der Oberseite des Trägergehäuses vermieden und in Arretierstellung eine raumsparende Anordnung erreicht wird. In der Lösestellung wird dagegen der Bügel in eine aufrechte Position verschwenkt, in welcher der obere Abschnitt des Bügels über die Oberseite des Trägergehäuses übersteht, sodass dieser Teil des Bügels leicht ergriffen werden kann. In der aufrechten Position des Bügels befindet sich der Bügelschuh in der Lösestellung.

Gemäß einer weiteren vorteilhaften Ausführung ist der Absatz am Trägergehäuse, an dem sich der Klemmabschnitt in Arretierstellung abstützt, als überstehende Ringschulter ausgebildet, die insbesondere über eine oder mehrere Verstärkungsrippen verstärkt sein kann, um sicherzustellen, dass die punktuell von dem Klemmabschnitt eingeleitete Stützkraft in Arretierposition nicht zu einem Verbiegen des üblicherweise aus einem verhältnismäßig weichen Kunststoffmaterial bestehenden Absatzes am Trägergehäuses führt.

Gemäß einer weiteren vorteilhaften Ausführung umfasst das Drehgelenk eine Gelenkaufnahme, in die ein Gelenkzapfen einragt. Hierbei kann es zweckmäßig sein, dass der Gelenkzapfen mit Spiel in der Gelenkaufnahme aufgenommen ist, um auβerhalb der Arretierposition ein leichtgängiges, reibungsfreies Verschwenken des Bügels zu ermöglichen. In Arretierstellung dagegen wird die Selbsthemmung des Bügels dadurch erreicht, dass der Klemmabschnitt sich an den hierfür vorgesehenen Absätzen am Trägergehäuse und am Filtergehäuse abstützt. Eine Abstützung am Gelenkzapfen ist dagegen nicht erforderlich, was den Vorteil bringt, dass der Gelenkzapfen keine Abstützkräfte aufnehmen muss und demzufolge auch keine hohen Stabilitätsanforderungen an den Gelenkzapfen gestellt werden. Es ist daher ausreichend, beispielsweise einen schwach ausgeprägten Gelenkzapfen am Trägergehäuse anzugießen, der in eine zugeordnete Gelenkaufnahme am Bügel einragt.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Filters, der axial von dem zu reini- genden Fluid durchströmt wird und ein radial in ein Filtergehäuse ein- setzbares Filterelement aufweist, das in einem Trägergehäuse aufge- nommen ist, an dem ein Bügel schwenkbar befestigt ist, wobei der Bü- gel in eine das Trägergehäuse im Filtergehäuse arretierende Stellung verschwenkbar ist,
- Fig. 2: eine Seitenansicht auf die das Trägergehäuse und das Filterelement umfassende Filterpatrone, die in den Aufnahmeraum im Filtergehäuse eingesetzt ist, wobei der Bügel am Trägergehäuse in seiner Arretier- stellung steht,
- Fig. 3: eine Draufsicht auf den Aufnahmeraum im Filtergehäuse, dargestellt ohne Filterpatrone,
- Fig. 4: eine Fig. 2 entsprechende Darstellung, jedoch mit teilweise einge- zeichneter Wandung des äußeren Filtergehäuses, in das die Filterpatrone eingesetzt ist,
- Fig. 5: eine weitere Ansicht von oben auf den Filter, mit eingesetzter und im Schnitt dargestellter Filterpatrone.

In den Figuren sind gleiche Bauteile mit gleichen Bezugszeichen versehen.

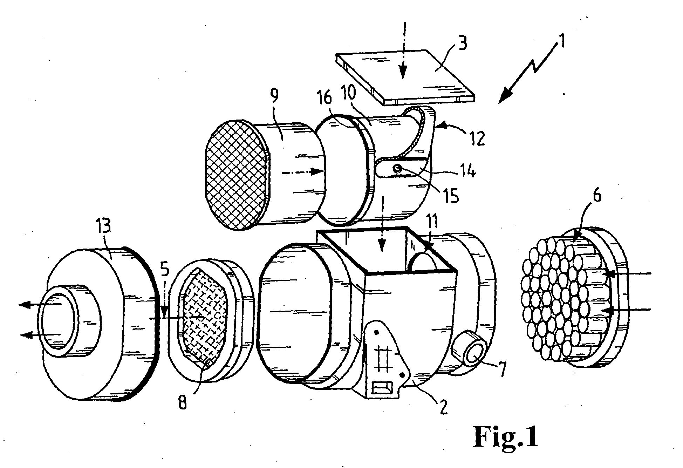

In Fig. 1 ist ein Luftfilter 1 dargestellt, der im Ansaugtrakt einer Brennkraftmaschine angeordnet wird, um die herangeführte Verbrennungsluft vor der Zufuhr zu den Lufteinlässen des Motors einer Filterung zu unterziehen. Der Filter 1 umfasst ein Filtergehäuse 2 mit einem nach oben offenen Aufnahmeraum 11, in den eine Filterpatrone von oben radial einsetzbar ist. Die Filterpatrone umfasst ein Filterelement 9 in einem Trägergehäuse 10. Zur vereinfachten Handhabung sowie zur Arretierung der Filterpatrone im eingesetzten Zustand ist am Trägergehäuse 10 ein Bügel 12 schwenkbar angeordnet.

Nach dem Einsetzen der Filterpatrone wird der Aufnahmeraum 11 von einem Gehäusedeckel 3 verschlossen, welcher über geeignete Verschlusselemente fest am Filtergehäuse 2 zu verriegeln ist. Die Filterpatrone mit Filterelement 9 und Trägergehäuse 10 besitzt im gezeigten Ausführungsbeispiel einen näherungsweise ovalen Querschnitt.

Das Filterelement 9 bildet im Filter 1 das zentrale Filterelement. Darüber hinaus ist ein als Zyklonvorabscheider 6 ausgeführter Vorfilter vorgeschaltet, dem in der gezeigten Pfeilrichtung die zu reinigende Rohluft zugeführt wird. Der gesamte Filter 1 wird in Richtung der Längsachse 5 von der zu reinigenden Luft durchströmt. Im Zyklonvorabscheider 6 werden die in der Rohluft enthaltenen Schmutzpartikel aufgrund der Fliehkraft im Zyklonvorabscheider nach außen getragen und über eine sich radial nach außen erstreckende Austragöffnung 7 aus dem Vorabscheidergehäuse entfernt.

Dem zentralen Filterelement 9 ist außerdem ein Feinfilter 8 axial nachgeschaltet, welcher auf der Abströmseite des Filters angeordnet ist. Dieser Feinfilter 8 ist von einem äußeren Deckelteil 13 zu verschließen, das axial auf die Stirnseite des Filters aufgesetzt wird.

Sowohl der Vorfilter (Zyklonvorabscheider 6) als auch der Nachfilter (Feinfilter 8) weisen zweckmäßig jeweils ein eigenes Gehäuse auf, welches separat vom Filtergehäuse 2 ausgeführt und in Montageposition mit dem Filtergehäuse 2 zu verbinden ist.

Am Bügel 12 ist ein Bügelschuh 15 ausgebildet, der die Funktion eines Klemmabschnittes hat und gemeinsam mit dem Bügel ein einteiliges Bauteil bildet. Dieser Bügelschuh ist etwa rechteckförmig ausgebildet. Außerdem ist im Bügelschuh 14 ein Drehgelenk 15 aufgenommen, bestehend aus einem Drehzapfen, welcher am Trägergehäuse 10 angegossen ist und radial über die Mantelfläche des Trägergehäuses 10 übersteht, sowie einer Aufnahme im Bügelschuh, in die der Gelenkzapfen einragt. Der Bügel 12 ist um den Gelenkzapfen zwischen einer Arretierposition und einer Löseposition zu verschwenken, wobei in Löseposition die Filterpatrone in die Aufnahme 11 eingesetzt bzw. aus dieser herausgenommen werden kann und in Arretierposition die eingesetzte Filterpatrone fest am Filtergehäuse 2 arretiert ist und außerdem der Bügel 12 eine selbsthemmende Position einnimmt. In der Arretierstellung des Bügels 12 sind die gegenüberliegenden Schmalseiten des Bügelschuhs 14 an Absätzen am Trägergehäuse 10 sowie am Filtergehäuse 2 abgestützt. Der Absatz am Trägergehäuse 10 ist als an der Stirnseite des Trägergehäuses umlaufende Ringschulter 16 ausgebildet.

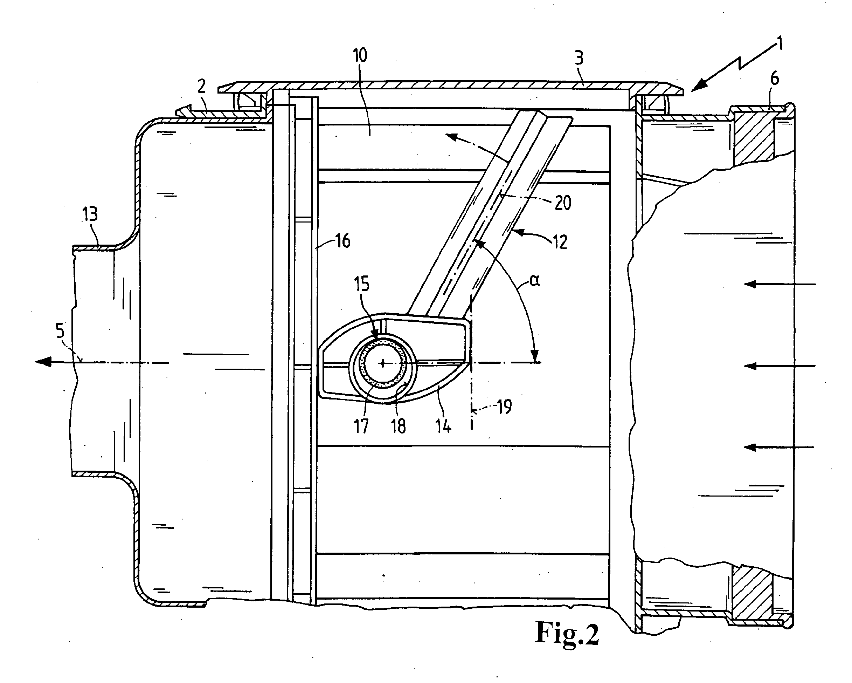

Wie Fig. 2 zu entnehmen, umfasst das Drehgelenk 15 die Gelenkaufnahme 18 im Bügelschuh 14, welche einen größeren Durchmesser aufweist als der Gelenkzapfen 17, welcher einteilig mit dem Trägergehäuse 10 ausgebildet ist. Hierdurch kann der Bügel 12 mit Spiel bewegt werden, was eine reibungsfreie Verschwenkung des Bügels ermöglicht. Der Gelenkzapfen 17 nimmt in der Gelenkaufnahme 18 eine exzentrische Lage ein.

In Fig. 2 befindet sich der Bügelschuh 14 in Arretierposition, in der die vordere Schmalseite des näherungsweise rechteckförmigen Bügelschuhs an der Ringschulter 16 und die hintere Schmalseite des Bügelschuhs an einem schematisch dargestellten Absatz 19 am Filtergehäuse 2 anliegt. In der Arretierposition ist der Bügelschuh 14 fest zwischen dem Absatz 19 und der Ringschulter 16 eingeklemmt. Die Ringschulter 16 besitzt Verstärkungsrippen, um einer Verformung durch die punktuell über den Bügelschuh 14 eingeleitete Klemmkraft vorzubeugen.

Über diese Ausführung stützt sich in der Arretierposition der Bügelschuh 14 einerseits an einem Absatz am Trägergehäuse 10 und andererseits an einem Absatz am Filtergehäuse 2 ab. Der Bügelschuh klemmt sich hierdurch selbsttätig fest, wodurch die Selbsthemmung erzielt wird. Außerdem wird die gesamte Filterpatrone mit Trägergehäuse 10 und darin aufgenommenem Filterelement innerhalb des Aufnahmeraums im Filtergehäuse 2 nach vorne in Richtung vorderes Deckelteil 13 axial verschoben und in dieser verschobenen Position im Aufnahmeraum festgesetzt, indem ein Bauteil der Filterpatrone, insbesondere die umlaufende Ringschulter 16 am Trägergehäuse 10, sich am Filtergehäuse 2 abstützt. Aufgrund der Abstützung an der Ringschulter 16 und dem Absatz 19 am Filtergehäuse 2 ist das Drehgelenk 15 von Arretier- bzw. Klemmkräften entlastet. Der Gelenkzapfen 17 muss keine Klemmkräfte aufnehmen.

Wie Fig. 2 außerdem zu entnehmen, liegt zwischen der Längsachse durch den Bügelschuh 14, die sich zwischen den Schmalseiten des etwa reckeckförmigen Bügelschuhs erstreckt und in der in Fig. 2 gezeigten Position des Bügelschuhs mit der Längsachse 5 des Filters zusammenfällt, und der Bügellängsachse 20 durch die seitlichen Bügelabschnitte ein Winkel α, welcher kleiner als 90° ist und insbesondere etwa 70° beträgt. Die seitlichen Bügelabschnitte des Bügels 12 münden in die Längsseiten des Bügelschuhs 14. Der Bügelschuh 14 ist einteilig mit dem Bügel 12 ausgebildet. Der Bügel 12 umgreift die Außenseite des Trägergehäuses 10 und erstreckt sich etwa halbkreisförmig über den Umfang des Trägergehäuses, wobei insgesamt zwei auf gegenüberliegenden Seiten des Trägergehäuses positionierte, identisch aufgebaute Bügelschuhe vorgesehen sind, die schwenkbar am Trägergehäuse 10 gehalten sind.

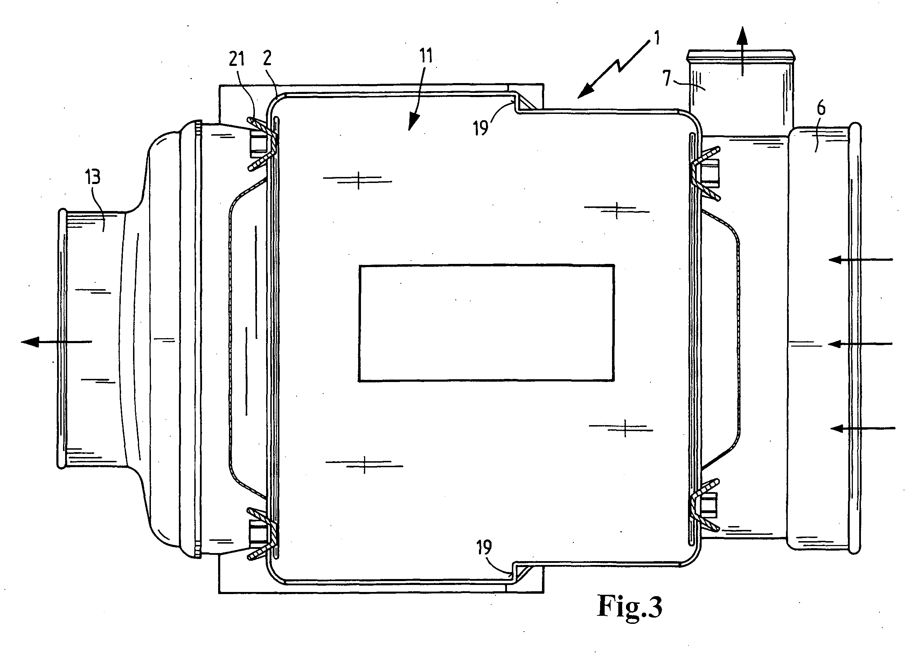

In Fig. 3 ist der Aufnahmeraum 11 im Filtergehäuse 2 in Draufsicht ohne Filterpatrone dargestellt. Zu erkennen sind die Absätze 19 im beidseitigen Seitenbereich des Aufnahmeraums 11 im Filtergehäuse 2, an denen sich in Arretierstellung die Bügelschuhe der eingesetzten Filterpatrone abstützen. Des Weiteren sind in Fig. 3 Klemmeinrichtungen 21 im oberen Teil des Filtergehäuses 2 dargestellt, über die der auf die offene Seite des Aufnahmeraumes 11 aufgesetzte Deckel fest mit dem Filtergehäuse 2 zu verbinden ist.

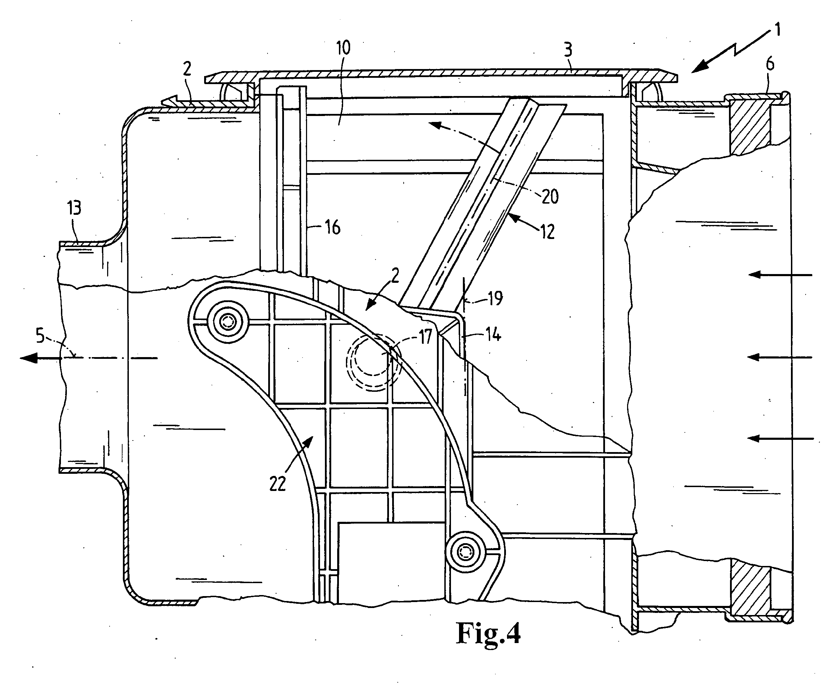

Die Darstellung gemäß Fig. 4 entspricht im Wesentlichen derjenigen aus Fig. 2, wobei in Fig. 4 zusätzlich eine den Aufnahmeraum begrenzende Wandung des Filtergehäuses 2 teilweise dargestellt ist. Auf der Außenseite dieser Wandung ist ein Befestigungsflansch 22 angeordnet, über den der Filter 1 im Ansaugtrakt der Brennkraftmaschine zu befestigen ist.

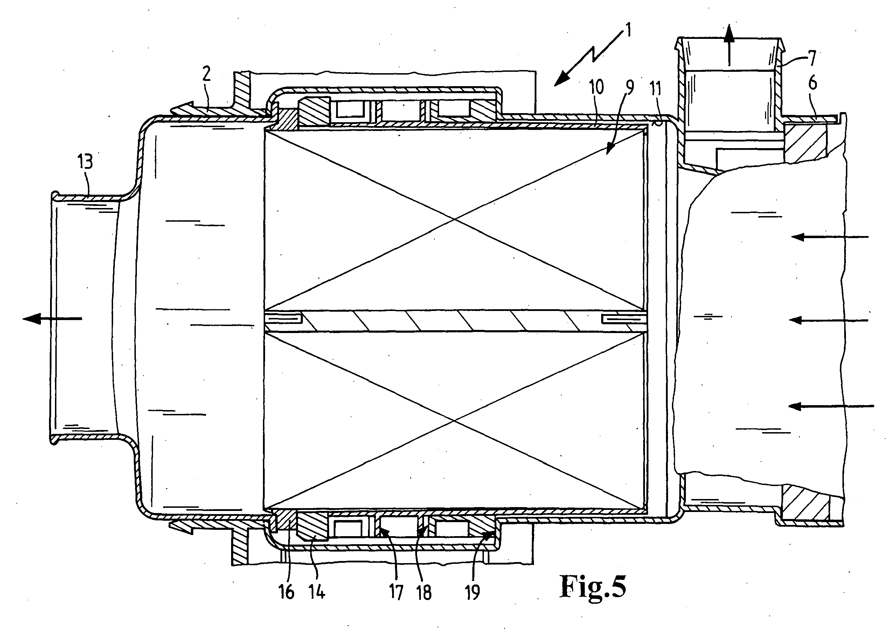

In Fig. 5 ist die Filterpatrone mit Filterelement 9 und Trägergehäuse 10 im Schnitt in der in den Aufnahmeraum 11 im Filtergehäuse 2 eingesetzten Position gezeigt. Dargestellt ist die Arretierposition, in der die vordere Schmalseite des Bügelschuhs 14 an der Ringschulter 16 am Trägergehäuse 10 und die hintere Schmalseite des Bügelschuhs am Absatz 19 am Filtergehäuse 2 anliegt. In der Arretierstellung ist die gesamte Filterpatrone innerhalb des Aufnahmeraumes 11 nach vorne verschoben, wodurch im hinteren Teil des Aufnahmeraumes 11 ein Spaltraum frei liegt. In der nach vorne verschobenen Arretierposition ist eine axiale Bewegung der Filterpatrone innerhalb des Aufnahmeraumes 11 ausgeschlossen.

Zu erkennen ist in Fig. 5 auch der Gelenkzapfen 17, welcher am Außenmantel des Trägergehäuses 10 angegossen ist. Der Gelenkzapfen 17 liegt mit Spiel in der Gelenkaufnahme 18, die im Bügelschuh 14 ausgebildet ist.

## Patentansprüche

1. Filter mit einem Filtergehäuse, mit einem in einem Trägergehäuse (10) aufgenommenen Filterelement (9), wobei das Trägergehäuse (10) in einen Aufnahmeraum (11) im Filtergehäuse (2) einsetzbar und im Aufnahmeraum (11) verriegelbär ist, und mit einem am Trägergehäuse (10) angeordneten Bügel (12), **dadurch gekennzeichnet, dass** der Bügel (12) über ein Drehgelenk (15) schwenkbar am Trägergehäuse (10) gehalten und zwischen einer Arretierstellung und einer Lösestellung verschwenkbar ist, wobei in Arretierstellung ein Klemmabschnitt des Bügels (12) zwischen einem Absatz (19) am Filtergehäuse (2) und einem Absatz (16) am Trägergehäuse (10) eingeklemmt und in einer selbsthemmenden Position gehalten ist.

2. Filter nach Anspruch 1, **dadurch gekennzeichnet, dass** der Klemmabschnitt als Bügelschuh (14) ausgebildet ist, der Teil des Drehgelenks (15) ist, über das der Bügel (12) schwenkbar am Trägergehäuse (10) gehalten ist.

3. Filter nach Anspruch 2, **dadurch gekennzeichnet, dass** der Bügelschuh (14) näherungsweise rechteckförmig ausgebildet ist, wobei in Arretierstellung die gegenüberliegenden Schmalseiten des Bügelschuhs (14) am Absatz (16, 19) am Trägergehäuse (10) bzw. am Filtergehäuse (2) abgestützt sind.

4. Filter nach Anspruch 3, **dadurch gekennzeichnet, dass** die Längsachse (5) des Bügelschuhs (14) mit der Achse des Bügels (12) einen Winkel (α) kleiner als 90° einschließt.

5. Filter nach Anspruch 4, **dadurch gekennzeichnet, dass** der Winkel (α) näherungsweise 70° beträgt.

6. Filter nach einem der Ansprüche 1 bis 5, **dadurch gekennzeichnet,**
**dass** der Absatz (16) am Trägergehäuse (10) als Ringschulter (16) ausgebildet ist.

7. Filter nach Anspruch 6, **dadurch gekennzeichnet, dass** in die Ringschulter (16) eine Verstärkungsrippe eingebracht ist.

8. Filter nach einem der Ansprüche 1 bis 7, **dadurch gekennzeichnet, dass** das Drehgelenk (15) eine Gelenkaufnahme (18) umfasst, in die ein Gelenkzapfen (17) einragt, wobei der Gelenkzapfen (17) mit Spiel in der Gelenkaufnahme (18) aufgenommen ist.

9. Filter nach einem der Ansprüche 1 bis 8, **dadurch gekennzeichnet, dass** das Filtergehäuse (2), das Trägergehäuse (10) und/oder der Bügel (12) jeweils als Kunststoff-Spritzgussbauteil ausgeführt sind.

## Claims

1. Filter with a filter housing, with a filter element (9) incorporated in a support housing (10), the support housing (10) being insertable into a receiving space (11) in the filter housing (2) and lockable in the receiving space (11), and with a clamping bracket (12) disposed at the support housing (10), **characterized in that** the clamping bracket (12) is held pivotably at the support housing (10) via a pivot joint (15) and can swivel between a locking position and a release position, a clamping section of the clamping bracket (12) being clamped between a protrusion (19) at the filter housing (2) and a protrusion (16) at the support housing (10) in locking position and held in a self-locking position.pivot joint

2. Filter according to claim 1, **characterized in that** the clamping section is designed as bracket shoe (14) which is part of the pivot joint (15) via which the clamping bracket (12) is held pivotably at the support housing (10).

3. Filter according to claim 2, **characterized in that** the bracket shoe (14) is designed approximately rectangularly, the opposing narrow sides of the bracket shoe (14) being supported by the protrusion (16, 19) at the support housing (10) and/or at the filter housing (2) in locking position.

4. Filter according to claim 3, **characterized in that** the longitudinal axis (5) of the bracket shoe (14) forms with the axis of the clamping bracket (12) an angle (α) smaller than 90°.

5. Filter according to claim 4, **characterized in that** the angle (α) is approximately 70°.

6. Filter according to one of the claims 1 to 5, **characterized in that** the protrusion (16) at the support housing (10) is designed as an annular shoulder (16).

7. Filter according to claim 6, **characterized in that** a reinforcing rib is inserted into the annular shoulder (16).

8. Filter according to one of the claims 1 to 7, **characterized in that** the pivot joint (15) comprises a joint receiving means (18) into which a joint bolt (17) projects, the joint bolt (17) being incorporated into the joint receiving means (18) with play.

9. Filter according to one of the claims 1 to 8, **characterized in that** the filter housing (2), the support housing (10) and/or the clamping bracket (12) is designed each as plastic injection molded part.

## Revendications

1. Filtre avec un boîtier de filtre, avec un élément filtrant (9) logé dans un boîtier-support (10), le boîtier-support (10) pouvant être inséré dans un logement (11) dans le boîtier de filtre (2) et verrouillé dans le logement (11), et avec un étrier (12) disposé sur le boîtier-support (10), **caractérisé en ce que** l'étrier (12) est maintenu sur le boîtier-support (10) de façon à pouvoir pivoter par le biais d'une articulation tournante (15) et peut basculer entre une position de blocage et une position de déblocage, une section de blocage de l'étrier (12) étant coincée, en position de blocage, entre un épaulement (19) sur le boîtier de filtre (2) et un épaulement (16) sur le boîtier-support (10) et étant maintenue dans une position autobloquante.

2. Filtre selon la revendication 1, **caractérisé en ce que** la section de blocage est réalisée comme un patin d'étrier (14) qui est une partie de l'articulation tournante (15) et par lequel est l'étrier (12) est maintenu sur le boîtier-support (10) de façon à pouvoir pivoter.

3. Filtre selon la revendication 2, **caractérisé en ce que** le patin d'étrier (14) a une forme quasiment rectangulaire, les côtés étroits opposés du patin d'étrier (14) s'appuyant, en position de blocage, sur l'épaulement (16, 19) du boîtier-support (10) ou du boîtier de filtre (2).

4. Filtre selon la revendication 3, **caractérisé en ce que** l'axe longitudinal (5) du patin d'étrier (14) forme avec l'axe de l'étrier (12) un angle (α) inférieur à 90°.

5. Filtre selon la revendication 4, **caractérisé en ce que** l'angle (α) est d'environ 70°.

6. Filtre selon l'une des revendications 1 à 5, **caractérisé en ce que** l'épaulement (16) du boîtier-support (10) est réalisé comme épaulement annulaire (16).

7. Filtre selon la revendication 6, **caractérisé en ce qu'**une rainure de renfort est insérée dans l'épaulement annulaire (16).

8. Filtre selon l'une des revendications 1 à 7, **caractérisé en ce que** l'articulation tournante (15) comprend un logement d'articulation (18) dans lequel entre un pivot (17), le pivot (17) étant logé avec du jeu dans le logement d'articulation (18).

9. Filtre selon l'une des revendications 1 à 8, **caractérisé en ce que** le boîtier de filtre (2), le boîtier-support (10) et/ou l'étrier (12) est réalisé respectivement comme pièce moulée par injection en plastique.
